# EUROPEAN PATENT APPLICATION

(11) **EP 4 249 775 A1**
(43) Date of publication of application: **27.09.2023**
(21) Application number: 21912907.9
(22) Date of filing: 10.06.2021
(51) Int. Cl.: F16H 59/02, F16H 63/32, F16H 63/34

(54) **TRANSMISSION SHIFTING AND PARKING STRUCTURE AND NEW ENERGY VEHICLE**

(30) Priority: 04.01.2021 CN 202110003891
(71) Applicant: Jing-Jin Electric Technologies Co., Ltd., Beijing 100015 (CN)
(72) Inventor: HOU, Defeng, Beijing 100015 (CN); LI, Jianwen, Beijing 100015 (CN); ZHANG, Jianjun, Beijing 100015 (CN)
(74) Representative: Tana, Maria Gabriella
(86) International application number: PCT/CN2021/099301
(87) International publication number: WO 2022/142148

(57) **Abstract**

A transmission shifting and parking structure and a new energy vehicle are disclosed. The transmission shifting and parking structure comprises: a rotary drive mechanism (1), a shifting rocker arm (2), a shift fork (3), a shifting actuator, a driving guide shaft (4), a parking rocker arm (5), a parking push rod assembly (6), and a parking actuator; the rotary drive mechanism (1) is used to drive the driving guide shaft (4) to rotate; one end of the shifting rocker arm (2) and one end of the parking rocker arm (5) are fixed on the driving guide shaft (4) and rotate with the driving guide shaft (4); the other end of the shifting rocker arm (2) is provided with a cylindrical pin (21), and as the shifting rocker arm (2) rotates, the cylindrical pin (21) moves along a shift fork typed groove (31) provided on the shift fork (3) and drives the shift fork (3) to move; the shift fork typed groove (31) is provided with multiple positions corresponding to gear positions; the other end of the parking rocker arm (5) is hinged with the parking push rod assembly (6), and the parking push rod assembly (6) drives the parking actuator to perform a parking operation. In this solution, the shifting operation and the parking operation are realized by using one set of mechanism, thereby saving the layout space of the shifting mechanism and the parking mechanism, reducing the number of driving sources and components, and reducing the cost.

## Description

### TECHNICAL FIELD

The present disclosure belongs to the technical field of vehicle transmissions, and particularly relates to a transmission shifting and parking structure and a new energy vehicle.

### BACKGROUND

In common automotive transmissions, the parking actuator and the shifting actuator are independent of each other and each needs a drive system to achieve respective function, which causes a large number of required components, a large layout space, and a high cost. In new energy vehicles with increasingly high integration of power systems, the integration of various systems is becoming increasingly high, and traditional layouts cannot meet the spatial layout requirements.

### SUMMARY

With respect to the above problems, the present disclosure discloses a transmission shifting and parking structure and a new energy vehicle to overcome or at least partially solve the above problems.

In order to achieve the above object, the present disclosure adopts the following technical solution.

An aspect of the present disclosure provides a transmission shifting and parking structure, which comprises: a rotary drive mechanism, a shifting rocker arm, a shift fork, a shifting actuator, a driving guide shaft, a parking rocker arm, a parking push rod assembly, and a parking actuator;
the rotary drive mechanism is used to drive the driving guide shaft to rotate;
one end of the shifting rocker arm and one end of the parking rocker arm are fixed on the driving guide shaft and rotate with the driving guide shaft;
the other end of the shifting rocker arm is provided with a cylindrical pin, and as the shifting rocker arm rotates, the cylindrical pin moves along a shift fork typed groove provided on the shift fork and drives the shift fork to move;
the shift fork typed groove is provided with multiple positions corresponding to II, N, I, and P gears, and when the cylindrical pin reaches each of these positions, the shift fork drives the shifting actuator to perform a shifting operation;
the other end of the parking rocker arm is hinged with the parking push rod assembly, and as the parking rocker arm rotates, the parking push rod assembly drives the parking actuator to perform a parking operation.

Optionally, the rotary drive mechanism is an electric motor.

Optionally, the shift fork comprises a groove forming part and a shift part, the shift part is fixedly connected to a lower part of the groove forming part, a plane in which the groove forming part is located is parallel to a plane in which the shifting rocker arm is located, and a plane in which the shift part is located is perpendicular to the plane in which the groove forming part is located.

Optionally, the shifting actuator further comprises a synchronizer gear sleeve, an outer ring of the synchronizer gear sleeve is provided with an annular groove, and the shift part of the shift fork is disposed in the annular groove and is engaged with the annular groove in a clearance fit.

Optionally, the shifting actuator comprises a shift fork shaft for guiding movement of the shift fork, the shift fork is slidably connected to or fixed to the shift fork shaft, and the shift fork shaft is connected to a housing of the transmission.

Optionally, positions corresponding to II, N, I, and P gears are sequentially arranged on the shift fork typed groove, and a width of the shift fork typed groove at the position corresponding to the P gear is less than or equal to a diameter of the cylindrical pin.

Optionally, the parking push rod assembly comprises a first slender rod, a spring, and a second conical rod, the first slender rod is movably sleeved in a hole of the second conical rod, the spring is sleeved on the first slender rod, one end of the spring is position-limited in a middle part of the first slender rod, and the other end of the spring is fixedly connected to the second conical rod.

Optionally, the parking actuator comprises a pawl and a parking gear;
a convex tooth is provided on a side of an end of the pawl that is close to the parking gear; and
when the parking rocker arm rotates to a parking position, the convex tooth of the pawl is pressed into a parking gear by compression of the second conical rod of the parking push rod assembly.

Optionally, the other end of the pawl is movably connected to the housing of the transmission.

Another aspect of the present disclosure provides a new energy vehicle. The new energy vehicle uses the transmission shifting and parking structure as described in any of the above items.

The advantages and beneficial effects of the present disclosure are as follows.

By adopting the above technical solutions, the shifting rocker arm and the parking rocker arm can be driven to move by one drive mechanism. Through the design of the shift fork typed groove on the shift fork, the shifting operation can be achieved without affecting the execution of parking. Thus, the shifting operation and the parking operation can be controlled by using one set of mechanism, thereby achieving the integrated design of the shifting mechanism and the parking mechanism, eliminating one actuating motor, saving the layout space of the shifting mechanism and the parking mechanism, reducing the number of components, and reducing the cost.

### BRIEF DESCRIPTION OF DRAWINGS

By reading the detailed description of the preferred implementations below, various other advantages and benefits will become clear to a person of ordinary skill in the art. The accompanying drawings are only used for the purpose of illustrating the preferred implementations, and should not be considered as a limitation to the present disclosure. Moreover, throughout the drawings, the same reference numerals are used to denote the same components. In the drawings:
FIG. 1 is a schematic diagram of a shifting and parking structure in an embodiment of the present disclosure;
FIG. 2 is a schematic diagram of the structure of a shift fork in an embodiment of the present disclosure;
FIG. 3 is a schematic diagram of the process of shifting and parking in an embodiment of the present disclosure;
FIG. 4 is a schematic side view of gear positions in an embodiment of the present disclosure; and
FIG. 5 is a schematic diagram of FIG. 4 from another direction.

In the drawings: 1, rotary drive mechanism; 2, shifting rocker arm; 21, cylindrical pin; 3, shift fork; 31, shift fork typed groove; 32, groove forming part; 33, shift part; 4, driving guide shaft; 5, parking rocker arm; 6, parking push rod assembly; 61, first slender rod; 62, spring; 63, second conical rod; 7, pawl; 8, parking gear; 9, shift fork shaft; 10, synchronizer gear sleeve; 101, annular groove.

### DETAILED DESCRIPTION

In order to make the object, technical solutions, and advantages of the present disclosure clearer, the present disclosure will be described clearly and completely in conjunction with the specific embodiments and corresponding drawings. Obviously, the embodiments described are only part of rather than all of the embodiments of the present disclosure. Based on the embodiments in the present disclosure, all other embodiments obtained by those of ordinary skill in the art without paying creative work shall fall within the protection scope of the present disclosure.

It should be understood that the terms "comprise/include", "consist of' or any other variants are intended to cover non-exclusive inclusion, so that the product, apparatus, process or method including a series of elements may not only include those elements, but may also include other elements not stated explicitly, or elements inherent to the product, apparatus, process or method. Without more limitations, an element defined by the phrase "comprise/include" or "consist of" does not exclude the case that there are other same elements in the product, apparatus, process or method including the element.

It should also be understood that, orientation or positional relationship indicated by the terms "upper", "lower", "front", "rear", "left", "right", "top", "bottom", "inside", "outside", etc. are orientation or positional relationship based on the drawings, which are merely for convenience of describing the present disclosure and simplifying the description, rather than indicating or implying that the device, component or structure referred to must have a specific orientation, or must be constructed and operated with a specific orientation, they should not be construed as limiting the present disclosure.

In the present disclosure, unless otherwise expressly specified and defined, the terms "installed", "connected", "coupled", "fixed" and the like should be understood in a broad sense, for example, it may be fixedly connected, or removably connected, or integrated; it may also be mechanically connected or electrically connected; it may also be directly connected or indirectly connected through a middleware; it may also be internally communicated or interacted between two components. For a person of ordinary skill in the art, the specific meaning of these terms in the present disclosure should be understood according to specific situations.

The technical solutions provided by the embodiments of the present disclosure are described in detail in conjunction with the accompanying drawings below.

### First Embodiment

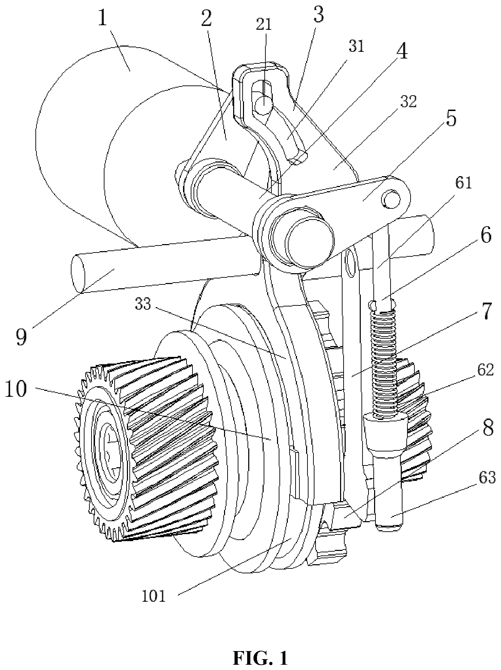

According to the schematic diagram of the shifting and parking structure shown in FIG. 1, the transmission shifting and parking structure comprises: a rotary drive mechanism 1, a shifting rocker arm 2, a shift fork 3, a shifting actuator, a driving guide shaft 4, a parking rocker arm 5, a parking push rod assembly 6, and a parking actuator. The rotary drive mechanism 1 is preferably an electric motor. The rotary drive mechanism 1 is used to drive the driving guide shaft 4 to rotate. One end of the shifting rocker arm 2 and one end of the parking rocker arm 5 are fixed (such as welded) on the driving guide shaft 4, and rotate with the driving guide shaft 4.

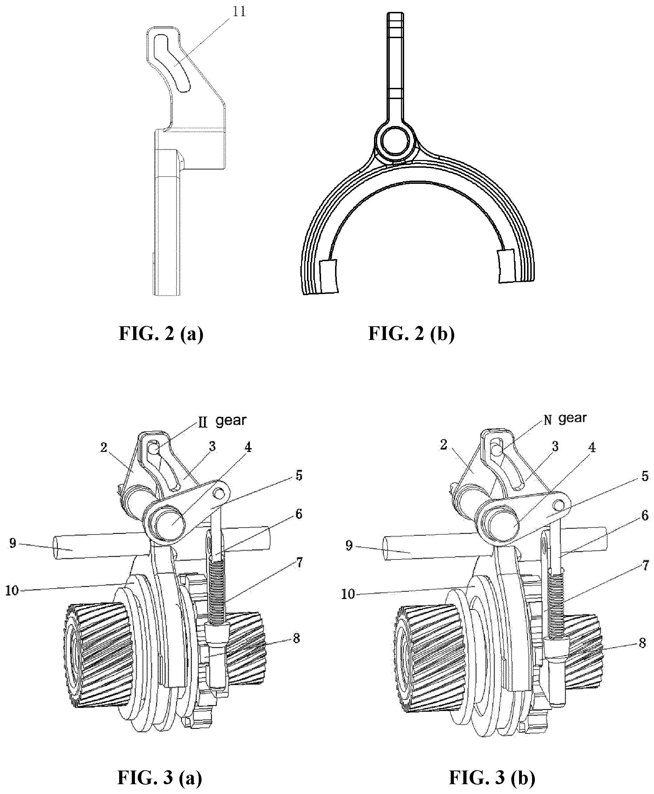

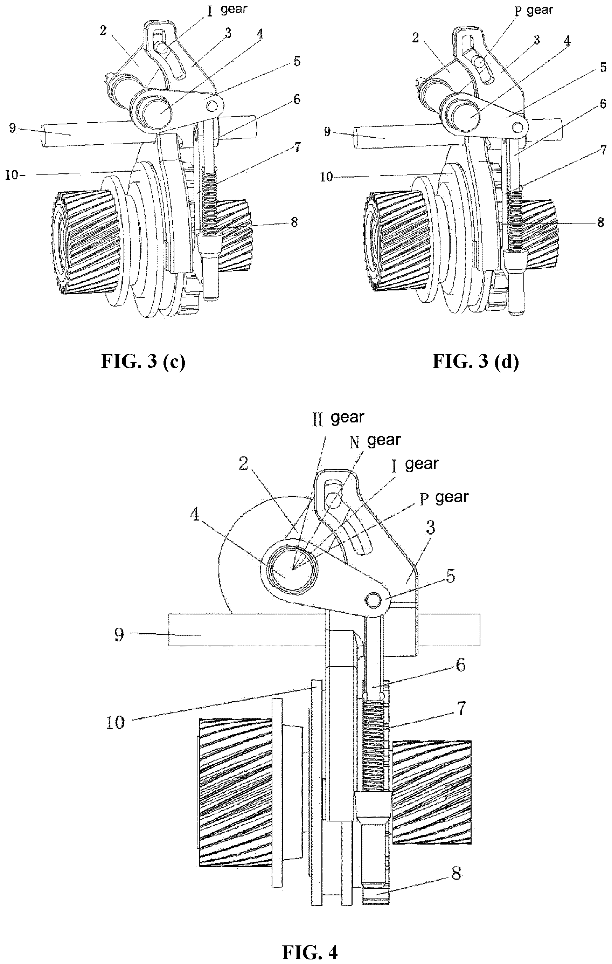

The other end of the shifting rocker arm 2 is provided with a cylindrical pin 21. As the shifting rocker arm 2 rotates, the cylindrical pin 21 moves along a shift fork typed groove 31 provided on the shift fork 3 and drives the shift fork 3 to move, as shown in FIGS. 3 (a) - (d). Multiple positions corresponding to I, II, P, and N gears are provided on the shift fork typed groove 31. When the cylindrical pin 21 reaches each of these positions, the shift fork 3 drives the shifting actuator to perform a shifting operation easily.

The other end of the parking rocker arm 5 is hinged with the parking push rod assembly 6, for example, the parking rocker arm 5 may be connected to the parking push rod assembly 6 by forming a clearance fit between the pin shaft and the hole. As the parking rocker arm 5 rotates, the parking push rod assembly 6 drives the parking actuator to perform a parking operation.

In a preferred implementation, as shown in FIGS. 2 (a) - (b), in which FIG. 2 (a) is a side view of the shift fork, and FIG. 2 (b) is a front view of the shift fork, the shift fork comprises a groove forming part 32 and a shift part 33. The shift part 33 is fixedly connected to a lower part of the groove forming part 32. A plane in which the groove forming part 32 is located is parallel to a plane in which the shifting rocker arm 2 is located, and a plane in which the shift part 33 is located is perpendicular to the plane in which the groove forming part 32 is located.

Further, the shifting actuator further comprises a synchronizer gear sleeve 10, an outer ring of the synchronizer gear sleeve 10 is provided with an annular groove 101, and the shift part 33 of the shift fork is disposed in the annular groove 101 and is engaged with the annular groove 101 in a clearance fit.

In an implementation, the shifting actuator comprises a shift fork shaft 9 for guiding the movement of the shift fork 3. The shift fork 3 is slidably connected or fixed to the shift fork shaft 9, and the shift fork shaft 9 is connected to a housing of the transmission.

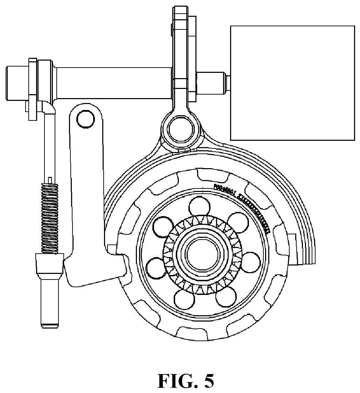

As shown in FIGS. 4-5, positions corresponding to II, N, I, and P gears are sequentially arranged on the shift fork typed groove 31. Among them, the I and II gears are forward gears with different speeds, the P gear is the park gear, and the N gear is the neutral gear. A width of the shift fork typed groove at the position corresponding to the P gear is less than or equal to a diameter of the cylindrical pin. The cylindrical pin 21 on the shifting rocker arm 2 will not push the shift fork 3 to move along the axis of the shift fork shaft 9. At this moment, the rotation of the parking rocker arm 5 will drive the parking push rod assembly 6 to move. The parking push rod assembly 6 will press the pawl 7 into a tooth groove of the parking gear 8 to complete the parking operation. Thus, the parking operation and the shifting operation are independently realized. When the parking operation is performed, the shifting does not occur; when the shifting operation is performed, the parking does not occur.

In a preferred implementation, the parking push rod assembly comprises a first slender rod 61, a spring 62, and a second conical rod 63. The first slender rod 61 is movably sleeved in a hole of the second conical rod 63. The spring 62 is sleeved on the first slender rod 61, one end of the spring 62 is movably position-limited in a middle part of the first slender rod 61, and the other end of the spring 62 is fixedly connected to the second conical rod 63. The spring 62 can play a role of buffering and restoring during the parking process.

The parking actuator comprises a pawl 7 and a parking gear 8. A convex tooth is provided on a side of an end of the pawl 7 that is close to the parking gear 8. When the parking rocker arm 5 rotates to the parking position, the convex tooth of the pawl 7 is pressed into the parking gear 8 by the compression of the second conical rod 63 of the parking push rod assembly 6.

During specific assembly, the other end of the pawl may be movably connected to the housing of the transmission.

### Second Embodiment

The second embodiment discloses a new energy vehicle using the shifting and parking structure in the first embodiment. It should be noted that the reversing of the new energy vehicle is achieved by reversing the main motor.

The above only describes the implementations of the present disclosure, and is not intended to limit the scope of protection of the present disclosure. Any modification, equivalent substitution, improvement, expansion, etc. made in the spirit and principle of the present disclosure shall all fall within the protection scope of the present disclosure.

## Claims

1. A transmission shifting and parking structure, **characterized by** comprising: a rotary drive mechanism (1), a shifting rocker arm (2), a shift fork (3), a shifting actuator, a driving guide shaft (4), a parking rocker arm (5), a parking push rod assembly (6), and a parking actuator;
the rotary drive mechanism (1) is used to drive the driving guide shaft (4) to rotate;
one end of the shifting rocker arm (2) and one end of the parking rocker arm (5) are fixed on the driving guide shaft (4) and rotate with the driving guide shaft (4);
the other end of the shifting rocker arm (2) is provided with a cylindrical pin (21), and as the shifting rocker arm (2) rotates, the cylindrical pin (21) moves along a shift fork typed groove (31) provided on the shift fork (3) and drives the shift fork (3) to move;
the shift fork typed groove (31) is provided with multiple positions corresponding to II, N, I, and P gears, and when the cylindrical pin (21) reaches each of these positions, the shift fork (3) drives the shifting actuator to perform a shifting operation;
the other end of the parking rocker arm (5) is hinged with the parking push rod assembly (6), and as the parking rocker arm (5) rotates, the parking push rod assembly (6) drives the parking actuator to perform a parking operation.

2. The transmission shifting and parking structure according to claim 1, **characterized in that**: the rotary drive mechanism (1) is an electric motor.

3. The transmission shifting and parking structure according to claim 1, **characterized in that**: the shift fork (3) comprises a groove forming part (32) and a shift part (33), the shift part (33) is fixedly connected to a lower part of the groove forming part (32), a plane in which the groove forming part (32) is located is parallel to a plane in which the shifting rocker arm (2) is located, and a plane in which the shift part (33) is located is perpendicular to the plane in which the groove forming part (32) is located.

4. The transmission shifting and parking structure according to claim 3, **characterized in that**: the shifting actuator further comprises a synchronizer gear sleeve (10), an outer ring of the synchronizer gear sleeve (10) is provided with an annular groove (101), and the shift part (33) of the shift fork (3) is disposed in the annular groove (101) and is engaged with the annular groove (101) in a clearance fit.

5. The transmission shifting and parking structure according to claim 1, **characterized in that**: the shifting actuator comprises a shift fork shaft (9) for guiding movement of the shift fork (3), the shift fork (3) is slidably connected to or fixed to the shift fork shaft (9), and the shift fork shaft (9) is connected to a housing of the transmission.

6. The transmission shifting and parking structure according to any one of claims 1-5, **characterized in that**: positions corresponding to II, N, I, and P gears are sequentially arranged on the shift fork typed groove (31), and a width of the shift fork typed groove (31) at the position corresponding to the P gear is less than or equal to a diameter of the cylindrical pin (21).

7. The transmission shifting and parking structure according to any one of claims 1-5, **characterized in that**: the parking push rod assembly (6) comprises a first slender rod (61), a spring (62), and a second conical rod (63), the first slender rod (61) is movably sleeved in a hole of the second conical rod (63), the spring (62) is sleeved on the first slender rod (61), one end of the spring (62) is position-limited in a middle part of the first slender rod (61), and the other end of the spring (62) is fixedly connected to the second conical rod (63).

8. The transmission shifting and parking structure according to claim 7, **characterized in that**: the parking actuator comprises a pawl (7) and a parking gear (8);
a convex tooth is provided on a side of an end of the pawl (7) that is close to the parking gear (8); and
when the parking rocker arm (5) rotates to a parking position, the convex tooth of the pawl (7) is pressed into a parking gear (8) by compression of the second conical rod (63) of the parking push rod assembly (6).

9. The transmission shifting and parking structure according to claim 8, **characterized in that**: the other end of the pawl (7) is movably connected to the housing of the transmission.

10. A new energy vehicle using the transmission shifting and parking structure according to any one of claims 1-9.
